# EUROPÄISCHE PATENTSCHRIFT

(11) **EP 1 222 763 B1**
(45) Veröffentlichungstag und Bekanntmachung des Hinweises auf die Patenterteilung: **07.11.2007**
(21) Anmeldenummer: 00934932.5
(22) Anmeldetag: 02.05.2000
(51) Int. Cl.: H04L 1/00

(54) **VERFAHREN ZUR ANPASSUNG DER DATENRATE IN EINER KOMMUNIKATIONSVORRICHTUNG**
METHOD FOR ADAPTING THE DATA RATE IN A COMMUNICATION DEVICE
PROCEDE D'ADAPTATION DU DEBIT DE DONNEES DANS UN DISPOSITIF DE COMMUNICATION

(30) Priorität: 07.10.1999 DE 19948369
(43) Veröffentlichungstag der Anmeldung: 17.07.2002
(73) Patentinhaber: SIEMENS AKTIENGESELLSCHAFT, 80333 München (DE)
(72) Erfinder: RAAF, Bernhard, D-81475 München (DE); LOBINGER, Andreas, D-83714 Miesbach (DE)
(86) Internationale Anmeldenummer: PCT/DE2000/001374
(87) Internationale Veröffentlichungsnummer: WO 2001/026273

(56) Entgegenhaltungen:
- US-A- 5 461 639
- US-A- 5 668 820
- US-A- 5 909 434

## Beschreibung

Die vorliegende Erfindung betrifft ein Verfahren nach dem Oberbegriff des Anspruches 1 zur Anpassung der Datenrate in einer Kommunikationsvorrichtung sowie eine entsprechende Kommunikationsvorrichtung nach dem Oberbegriff des Anspruches 16.

Die Mobilfunktechnik befindet sich in einer raschen Entwicklung. Augenblicklich wird an der Standardisierung des sogenannten UMTS-Mobilfunkstandards ('Universal Mobile Telecommunication System') für Mobilfunkgeräte der dritten Mobilfunkgeneration gearbeitet. Gemäß dem derzeitigen Stand der UMTS-Standardisierung ist vorgesehen, die über einen Hochfrequenzkanal zu übertragenden Daten einer Kanalcodierung zu unterziehen, wobei hierzu insbesondere Faltungscodes ('Convolutional Codes') verwendet werden. Durch die Kanalcodierung werden die zu übertragenden Daten redundant codiert, wodurch auf der Empfängerseite eine zuverlässigere Wiedergewinnung der gesendeten Daten möglich ist. Der bei der Kanalcodierung jeweils verwendete Code wird durch seine Coderate r = k/n charakterisiert, wobei k die Anzahl der zu übertragenden Daten- oder Nachrichtenbits und n die Anzahl der nach der Codierung vorliegenden Bits bezeichnet. Je kleiner die Coderate ist, desto leistungsfähiger ist in der Regel der Code. Ein mit der Codierung verbundenes Problem ist jedoch, daß die Datenrate um den Faktor r reduziert wird.

Um die Datenrate des codierten Datenstroms an die jeweils mögliche Übertragungsrate anzupassen, wird im Sender eine Ratenanpassung ('Rate Matching') durchgeführt, wobei nach einem bestimmten Muster entweder Bits aus dem Datenstrom entfernt oder in dem Datenstrom verdoppelt werden. Das Entfernen von Bits wird als 'Punktieren' und das Verdoppeln als 'Repetieren' bezeichnet.

Gemäß dem derzeitigen Stand der UMTS-Standardisierung wird vorgeschlagen, zur Ratenanpassung einen Algorithmus zu verwenden, der eine Punktierung mit einem annähernd regelmäßigen Punktierungsmuster durchführt, d.h. die zu punktierenden Bits sind äquidistant über den jeweils zu punktierenden codierten Datenblock verteilt.

Darüber hinaus ist bekannt, daß bein Faltungscodieren die Bitfehlerrate (Bit Error Rate, BER) am Rand eines entsprechend codierten Datenblocks abnimmt. Ebenso ist bekannt, daß die Bitfehlerrate innerhalb eines Datenblocks durch ungleichmäßig verteiltes Punktieren lokal verändert werden kann. Diese Erkenntnisse wurden dazu genützt, heuristisch ein Punktierungsmuster zu finden, nach dessen Anwendung alle Bits des punktierten Datenblocks eine ihrer jeweiligen Wichtigkeit entsprechende Bitfehlerrate besitzen. Ein derartiges Vorgehen ist jedoch für UMTS-Mobilfunksysteme nicht praktikabel, da hier ein allgemeingültiger Algorithmus benötigt wird, der für jede Bitanzahl eines zu punktierenden Datenblocks und für jede Punktierungsrate die gewünschten Ergebnisse liefert.

Aus dem Dokument US-A 5,909,434 ist ein System zur Datenratenanpassung bekannt, bei dem Datenblöcke in Abhängigkeit von der benutzten Datenrate nach einem gleichförmigen Punktierungsmuster punktiert werden.

Der vorliegenden Erfindung liegt daher die Aufgabe zugrunde, ein Verfahren zur Anpassung der Datenrate eines Datenstroms in einer Kommunikationsvorrichtung und sowie eine entsprechende Kommunikationsvorrichtung bereitzustellen, welche zu einer zufriedenstellenden Bitfehlerrate führt und insbesondere in Mobilfunksystemen mit Faltungscodierung einsetzbar ist.

Diese Aufgabe wird erfindungsgemäß durch ein Verfahren mit den Merkmalen des Anspruches 1 bzw. eine Kommunikationsvorrichtung mit den Merkmalen des Anspruches 16 gelöst. Die Unteransprüche definieren bevorzugte und vorteilhafte Ausführungsformen der vorliegenden Erfindung.

Erfindungsgemäß werden die einzelnen Datenblöcke des Datenstroms zur Anpassung der Datenrate gemäß einem bestimmten Punktierungsmuster punktiert, wobei das Punktierungsmuster derart ausgestaltet ist, daß es eine von einem mittleren Bereich der einzelnen Datenblöcke zu mindestens einem Ende der einzelnen Datenblöcke hin stetig zunehmende Punktierungsrate aufweist.

Vorzugsweise weist das Punktierungsmuster eine von dem mittleren Bereich zu beiden Enden des jeweiligen Datenblocks hin stetig zunehmende Punktierungsrate auf. Auf diese Weise werden die Bits am Anfang und Ende des jeweils zu punktierenden Datenblocks stärker punktiert, wobei dies nicht mit einer gleichmäßigen Punktierungsrate, sondern mit einer zu den beiden Enden des jeweiligen Datenblocks hin kontinuierlich ansteigenden Punktierungsrate erfolgt, d.h. der Abstand zwischen den punktierten Bits wird zu den beiden Enden des Datenblocks hin immer kürzer.

Diese Punktierung führt zu einer über den punktierten Datenblock gleichmäßiger verteilten Fehlerrate der einzelnen Bits und hat zudem eine verminderte Gesamtfehlerwahrscheinlichkeit zur Folge.

Diese Vorteile werden auch dann beibehalten, wenn die Datenblöcke zunächst wie beschrieben punktiert und anschließend nochmals einer Punktierung mit einem gleichmäßgen Punktierungsmuster unterzogen. Ebenso kann anschließend an die zuvor beschriebene Punktierung eine Repetierung durchgeführt werden. Auf diese Weise kann sehr einfach durch zwei aufeinanderfolgende Operationen, nämlich durch eine Punktierung mit einem fixen Punktierungsmuster, dessen Punktierungsrate stetig zu den beiden Enden des jeweiligen Datenblocks zunimmt, und eine anschließende weitere Punktierung oder Reptierung, die gewünschte Datenrate, d.h. die gewünschte Anzahl von zu übertragenden Bits pro Datenblock, erhalten werden.

Die vorliegende Erfindung eignet sich insbesondere zur Anpassung der Datenrate eines faltungscodierten Datenstroms und kann somit bevorzugt in UMTS-Mobilfunksystemen eingesetzt werden, wobei dies sowohl den Bereich des Mobilfunksenders als auch denjeniges des Mobilfunkempfängers betrifft. Die Erfindung ist jedoch nicht auf diesen Anwendungsbereich beschränkt, sondern kann allgemein überall dort Anwendung finden, wo die Datenrate eines Datenstroms anzupassen ist.

Die vorliegende Erfindung wird nachfolgend unter Bezugnahme auf die beigefügte Zeichnung anhand bevorzugter Ausführungsbeispiele näher beschrieben.
Fig. 1 zeigt ein vereinfachtes Blockschaltbild eines erfindungsgemäßen Mobilfunksenders,
Fig. 2 zeigt eine Darstellung von verschiedenen Ausführungsbeispielen für ein Punktierungsmuster, welches von einer in Fig. 1 gezeigten Einheit zur Anpassung der Datenrate verwendet werden kann,
Fig. 3A zeigt einen Vergleich der mit einer erfindungsgemäßen Punktierung bzw. einer herkömmlichen Punktierung hinsichtlich der über einen punktierten Datenblock verteilten Bitfehlerwahrscheinlichkeit erzielbaren Ergebnisse, und
Fig. 3B zeigt einen Vergleich der mit einer erfindungsgemäßen Punktierung bzw. einer herkömmlichen Punktierung hinsichtlich der daraus resultierenden Gesamtfehlerwahrscheinlichkeit erzielbaren Ergebnisse.

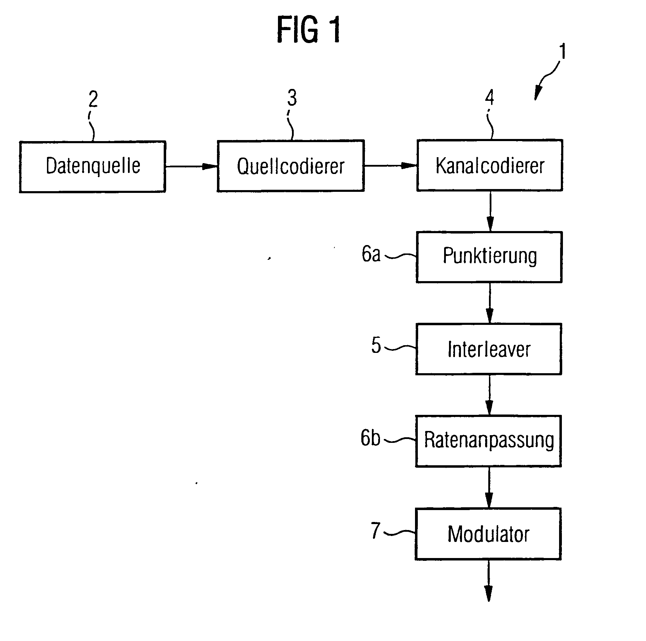

In Fig. 1 ist schematisch der Aufbau eines erfindungsgemäßen Mobilfunksenders 1 dargestellt, von dem Daten oder Kommunikationsinformationen, insbesondere Sprachinformationen, über einen Hochfrequenz-Übertragungskanal an einen Empfänger übertragen werden. In Fig. 1 sind insbesondere die an der Codierung dieser Informationen oder Daten beteiligten Komponenten dargestellt. Die von einer Datenquelle 2, beispielsweise einem Mikrofon, gelieferten Informationen werden zunächst mit einem digitalen Quellcodierer 3 in eine Bitfolge umgesetzt. Die sprachcodierten Daten werden anschließend mit Hilfe eines Kanalcodierers 4 codiert, wobei die eigentlichen Nutz- oder Nachrichtenbits redundant codiert werden, wodurch Übertragungsfehler erkannt und anschließend korrigiert werden können. Die sich bei der Kanalcodierung ergebende Coderate r ist eine wichtige Größe zur Beschreibung des jeweils bei der Kanalcodierung eingesetzten Codes und ist, wie bereits erwähnt worden ist, durch den Ausdruck r = k/N definiert. Dabei bezeichnet k die Anzahl der Datenbits und N die Anzahl der insgesamt codierten Bits, d.h. die Anzahl der hinzugefügten redundanten Bits entspricht dem Ausdruck N - k. Ein Code mit der oben definierten Coderate r wird auch als (N,k)-Code bezeichnet, wobei die Leistungsfähigkeit des Codes mit abnehmender Coderate r zunimmt. Zur Kanalcodierung werden üblicherweise sogenannte Blockcodes oder Faltungscodes verwendet.

Nachfolgend soll davon ausgegangen werden, daß - wie durch den derzeitigen Stand der UMTS-Standardisierung festgelegt ist - bei der Kanalcodierung Faltungscodes zur Anwendung kommen. Ein wesentlicher Unterschied zu Blockcodes besteht darin, daß bei Faltungscodes nicht einzelne Datenblöcke nacheinander codiert werden, sondern daß es sich um eine kontinuierliche Verarbeitung handelt, wobei jedes aktuelle Codewort einer zu codierenden Eingangssequenz auch von den vorhergehenden Eingangssequenzen abhängt. Unabhängig von der Coderate r = k/N werden Faltungscodes auch durch die sogenannte Einflußlänge oder 'Constraint Length' K charakterisiert. Die 'Constraint Length' gibt an, über wieviele Takte von k neuen Eingangsbits des Faltungscodierers 5 ein Bit das von dem Faltungscodierer 5 ausgegebene Codewort beeinflußt.

Vor der Übertragung der kanalcodierten Informationen zu dem Empfänger können diese einem Interleaver 5 zugeführt werden, der die zu übertragenden Bits gemäß einem bestimmten Schema zeitlich umordnet und dabei zeitlich spreizt, wodurch die in der Regel bündelweise auftretenden Fehler verteilt werden, um einen sogenannten gedächnislosen (memoryless) Übertragungskanal mit einer quasizufälligen Fehlerverteilung zu erhalten. Die auf diese Weise codierten Informationen oder Daten werden einem Modulator 7 zugeführt, dessen Aufgabe es ist, die Daten auf ein Trägersignal aufzumodulieren und gemäß einem vorgegebenen Vielfachzugriffsverfahren über einen Hochfrequenz-Übertragungskanal an einen Empfänger zu übertragen.

Zur Übertragung wird der codierte Datenstrom in Datenblöcke aufgeteilt, wobei der Faltungscodierer 4 zu Beginn eines Datenblocks in einen bekannten Zustand gesetzt wird. Am Ende wird jeder codierte Datenblock durch sogenannte 'Tailbits' abgeschlossen, so daß der Faltungscodierer 4 sich wieder in einem bekannten Zustand befindet. Durch diesen Aufbau des Faltungscodes sowie des Faltungscodierers 4 wird erreicht, daß die Bits am Anfang und Ende eines codierten Datenblocks besser als in der Blockmitte gegen Übertragungsfehler geschützt sind.

Die Fehlerwahrscheinlichkeit eines Bits ist abhängig von seiner Lage innerhalb des jeweiligen Datenblocks unterschiedlich. Dieser Effekt wird beispielsweise bei der Sprachübertragung in GSM-Mobilfunksystemen ausgenützt, indem die wichtigsten Bits an den beiden Blockenden plaziert werden, wo die Fehlerwahrscheinlichkeit am geringsten ist. Bei Datenübertragungen werden jedoch im allgemeinen Datenpakete bereits dann verworfen, wenn nur ein einziges übertragenes Bits fehlerhaft ist, was beispielsweise im Empfänger durch einen sogenannten 'Cyclic Redundancy Check' (CRC) festgestellt werden kann. Daher kann bei einer Datenübertragung nicht von wichtigen oder weniger wichtigen Bits gesprochen werden, sondern alle Bits sind als gleich wichtig anzusehen.

Um die Datenrate des codierten Datenstroms an die jeweils mögliche Übertragungsrate anzupassen, wird vor dem Modulator 7 eine Ratenanpassung ('Rate Matching') durchgeführt. Bei dem in Fig. 1 gezeigten Ausführungsbeispiel ist die Ratenanpassung auf zwei Einheiten 6a und 6b aufgeteilt, wobei die Einheit 6a eine Punktierung gemäß einem bestimmten Punktierungsmuster durchführt, um eine gleichmäßigere Fehlerverteilung über einen Datenblock zu erzielen. Die optionale Einheit 6b führt daran anschließend gegebenenfalls eine weitere Punktierung oder eine Repetierung durch, um schließlich die gewünschte Datenrate zu erhalten. Die in Fig. 1 gezeigte Reihenfolge der Einheiten 6a und 6b sowie des Interleavers 5 sind lediglich beispielhaft zu verstehen. Der Interleaver kann auch nach der Einheit 6b angeordnet sein. Ebenso kann der Interleaver 5 auch durch zwei Interleaver vor und nach der Einheit 6b ersetzt sein usw..

Der vorliegenden Erfindung liegt das Prinzip zugrunde, die codierten Datenblöcke während der Ratenanpassung am Anfang und/oder am Ende des jeweiligen Datenblocks stärker zu punktieren, wobei dies mit einer vom Rand zur Mitte des jeweiligen Datenblocks abnehmenden Punktierungsrate erfolgt, d.h. in einem von der Einheit 6a ausgegebenen Datenblock ist der Abstand zwischen aufeinanderfolgenden Punktierungen am Anfang und am Ende des jeweiligen Datenblocks am kleinsten und wird zur Mitte hin immer größer.

Für die von der Einheit 6a zu verwendenden Punktierungsmuster sind unterschiedliche Ausführungsformen denkbar. Im einfachsten Fall wird die Punktierung jedes Datenblocks stets mit demselben Muster durchgeführt. Ebenso kann jedoch auch abhängig von der Länge des jeweils zu punktierenden Datenblocks ein unterschiedliches Punktierungsmuster verwendet werden. Diese Vorgehensweise ist insbesondere bei kurzen Datenblöcken vorteilhaft, da in diesem Fall das vorgegebene Punktierungsmuster verkürzt werden kann, um ein Überlagern oder 'Ineinanderwachsen' der für den-Blockanfang und das Blockende vorgesehenen Abschnitte des Punktierungsmusters zu vermeiden, was ansonsten eine zu starke Punktierung des mittleren Bereichs des Datenblocks zur Folge haben könnte.

Bei Verwendung eines Faltungscodes mit einer Coderate r = 1/n und einer 'Constraint Length' K werden in einen codierten Datenblock n* (K-1) Tailbits eingefügt. Das von der Ratenanpassungseinheit 6 angewendete Punktierungsmuster sollte daher in diesem Fall derart ausgestaltet sein, daß am Anfang und Ende des zu punktierenden Datenblocks zusammen weniger als n*(K-1) Bits punktiert werden. Dies kann dadurch erreicht werden, daß jeweils am Anfang und am Ende des Datenblocks weniger als n*(K-1)/2 Bits punktiert werden.

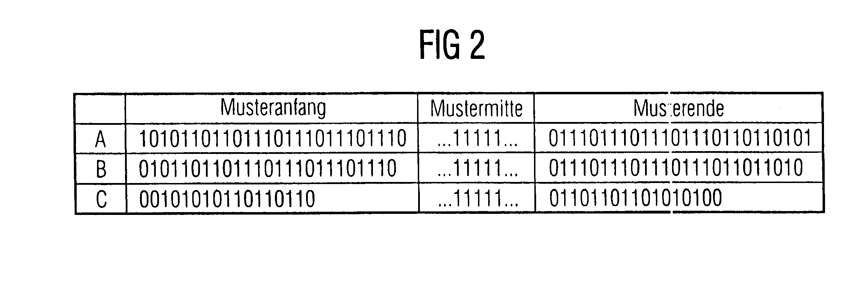

In Fig. 2 sind verschiedene Möglichkeiten für erfindungsgemäße Punktierungsmuster dargestellt, wobei die einzelnen Punktierungsmuster A-C jeweils in einen (auf den Anfang eines Datenblocks anzuwendenden) Musteranfangsabschnitt, einen (auf den mittleren Bereich des Datenblocks anzuwendenden) Mustermittelabschnitt und einen (auf das Ende des Datenblocks anzuwendenden) Musterendabschnitt aufgeteilt sind und jede Ziffer ein codiertes Bit darstellt. Durch eine '1' wird ein zu übertragendes Bit und durch eine '0' ein aus dem jeweiligen Datenblock zu entfernendes oder zu punktierendes Bit bezeichnet. Die einzelnen Muster können jeweils algorithmisch gebildet werden und haben gemeinsam, daß durch den Mustermittelabschnitt jeweils kein Bit punktiert wird, da er ausschließlich '1'-Bits umfaßt. Die Musteranfangs- und Musterendabschnitte sind hingegen jeweils derart ausgestaltet, daß vom Mittelabschnitt zum Rand hin die Punktierungsrate kontinuierlich zunimmt und die Abstände zwischen den punktierten Bits immer kürzer werden. Zudem sind die einzelnen Muster A-C jeweils derart ausgestaltet, daß der Musterendabschnitt spiegelsymmetrisch zu dem Musteranfangsabschnitt aufgebaut ist. Alternativ können auch für den Musteranfangsabschnitt und den Musterendabschnitt unterschiedliche Muster verwendet werden. Ebenso ist denkbar, die Punktierung auch nur auf einer Seite, d.h. entweder am Anfang oder am Ende des jeweiligen Datenblocks, durchzuführen.

Wie Fig. 2 entnommen werden kann, werden durch das Muster A - von den beiden Enden oder Rändern des zu punktierenden Datenblocks her gesehen - jeweils die Bits Nr. 2, 4, 7, 10, 14, 18, 22 und 26 an beiden Enden des Datenblocks punktiert. Beim Muster B werden hingegen die Bits Nr. 1, 3, 6, 9, 13, 17, 21 und 25 des jeweiligen Datenblocks punktiert, während beim Muster C die Bits Nr. 1, 2, 4, 6, 8, 11, 14 und 17 punktiert werden.

Es können auch Punktierungsmuster mit einer geringeren Punktierungsrate verwendet werden. Wird nach der Punktierung eine weitere, herkömmliche Punktierung mit einem gleichmäßigen Punktierungsmuster, d.h. mit einem äquidistanten oder annähernd äquidistanten Abstand zwischen den einzelnen punktierten Bits, verwendet, ist jedoch die Wahrscheinlichkeit größer, daß der durch die Erfindung erzielte Gewinn reduziert oder beseitigt wird. Daher ist die Verwendung von Punktierungsmustern mit einer zu den dargestellten Mustern A-C ähnlichen Punktierungsrate vorteilhaft.

Wie bereits erwähnt worden ist, kann die erfindungsgemäße Punktierung mit einem weiteren Punktierungsvorgang oder einem Repetierungsvorgang kombiniert werden, um schließlich die gewünschte Datenrate zu erhalten. Diese Aufgabe wird von der in Fig. 1 gezeigten Einheit 6b wahrgenommen, welche hierzu vorzugsweise ein regelmäßiges oder annähernd regelmäßiges Punktierungs- oder Repetierungsmuster verwendet.

Es kann ungünstig sein, wenn auf die am Ende eines Datenblocks durchgeführte Punktierung eine Repetierung einer relativ großen Anzahl von Bits folgt. Zur Abhilfe können auch sämtliche Bits des jeweiligen Datenblocks mit Ausnahme der in dem anzuwendenden Punktierungsmuster mit '0' bezeichneten Bits verdoppelt werden, wobei anschließend anstelle der ursprünglichen Repetierung die Punktierung der auf diese Weise verarbeiteten Bits mit einem passenden Punktierungsmuster durchgeführt wird. Als Ergebnis wird dann die gewünschte Anzahl von Bits bzw. die gewünschte Datenrate erhalten. Anstelle der Verdoppelung kann auch allgemein eine Vervielfachung der Bits angewandt werden, wobei die mit '0' bezeichneten Bits nicht oder mit einem geringeren Faktor vervielfacht werden.

In Fig. 3A ist beispielhaft der Verlauf der Bitfehlerrate für die einzelnen übertragenen Bits eines Datenblocks in Abhängigkeit von ihrer Position oder Lage in dem Datenblock für eine herkömmliche Punktierung mit einer regelmäßgen Punktierungsrate von 20% (Kurve a) und für eine erfindungsgemäße Punktierung mit dem obigen Muster C, bei der lediglich jeweils acht Bits am Anfang und Ende des Datenblocks mit einer jeweils zum Datenblockrand hin zunehmenden Punktierungsrate punktiert werden, in Kombination mit einer nachfolgenden regelmäßigen Punktierung mit einer Punktierungsrate von 10% (Kurve b) aufgetragen. Aus Fig. 3A ist ersichtlich, daß durch Verwendung des erfindungsgemäßen Punktierungsmusters, durch welches insbesondere die Tailbits des zu übertragenden Datenblocks punktiert werden, ein gleichmäßigerer Verlauf der Bitfehlerrate über den gesamten Datenblock erzielt werden kann. Da im mittleren Bereich des Datenblocks gegenüber der herkömmlichen Vorgehensweise weniger häufig punktiert wird, kann dort eine geringere Fehlerwahrscheinlichkeit erhalten werden.

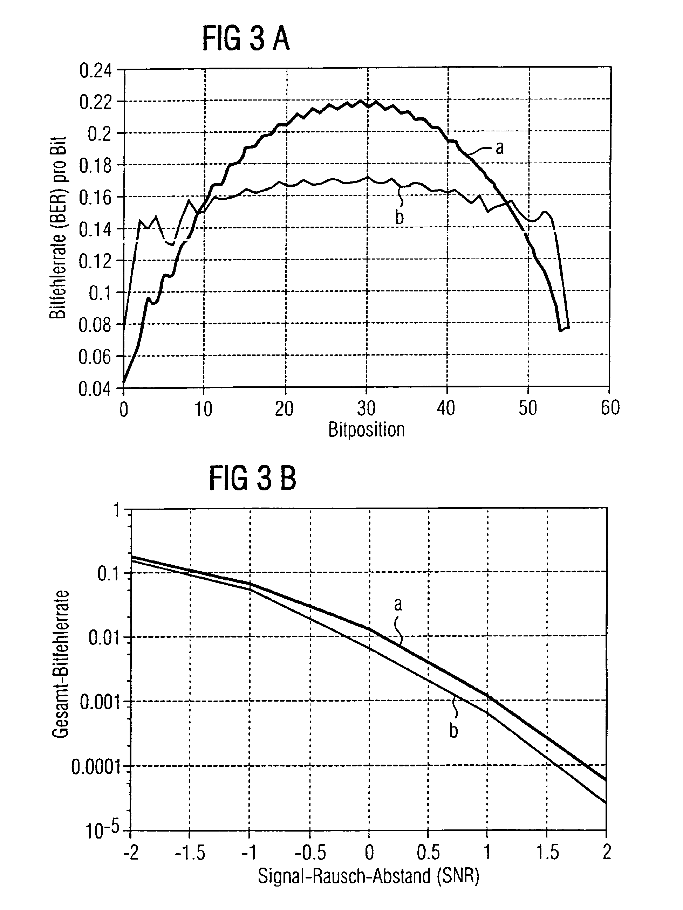

In Fig. 3B ist für dieselben Fälle der Verlauf der Gesamtfehlerrate über den Signal-Rausch-Abstand (SNR) aufgetragen. Aus Fig. 3B ist ersichtlich, daß mit Hilfe der Erfindung (Kurve b) eine gegenüber der herkömmlichen Vorgehensweise (Kurve a) um ca. 0,25dB verbesserte Bitfehlerrate erzielt werden kann.

Die vorliegende Erfindung wurde zuvor anhand der Verwendung in einem Mobilfunksender beschrieben. Selbstverständlich kann die Erfindung jedoch auch auf Mobilfunkempfänger ausgedehnt werden, wo ein zur Anpassung der Datenrate auf oben beschriebene Art und Weise punktiertes bzw. repetiertes Signal entsprechend dem jeweils verwendeten Punktierungs- bzw. Repetierungsmuster aufgearbeitet werden muß. Dabei werden in dem jeweiligen Empfänger für sendeseitig punktierte bzw. repetierte Bits zusätzliche Bits in den Empfangs-Bitstrom eingefügt bzw. zwei oder mehr Bits des Empfangs-Bitstroms zusammengefaßt. Bei Einfügen von zusätzlichen Bits wird für diese gleichzeitig in Form einer sogenannten 'Soft Decision'-Information vermerkt, daß ihr Informationsgehalt sehr unsicher ist. Die Verarbeitung des Empfangssignals kann in dem jeweiligen Empfänger sinngemäß in umgekehrter Reihenfolge zu Fig. 1 erfolgen.

## Patentansprüche

1. Verfahren zur Anpassung der Datenrate in einer Kommunikationsvorrichtung,
umfassend eine Punktierung eines Datenblocks eines Datenstroms gemäß einem bestimmten Punktierungsmuster, um somit die Datenrate anzupassen, wobei durch die Punktierung dem Punktierungsmuster entsprechende Bits aus dem Datenblock entfernt werden,
**dadurch gekennzeichnet,**
**daß** die Punktierung mit einem Punktierungsmuster durchgeführt wird, welches von einem mittleren Bereich des Datenblocks zu mindestens einem Ende des Datenblocks hin eine stetig zunehmende Punktierungsrate aufweist.

2. Verfahren nach Anspruch 1,
**dadurch gekennzeichnet,**
**daß** die Punktierungsrate des Punktierungsmusters im mittleren Bereich des Datenblocks im wesentlichen 0% beträgt.

3. Verfahren nach Anspruch 1 oder 2,
**dadurch gekennzeichnet,**
**daß** die Punktierung mit einem Punktierungsmuster durchgeführt wird, welches von dem mittleren Bereich des Datenblocks zu beiden Enden des Datenblocks hin eine stetig zunehmende Punktierungsrate aufweist.

4. Verfahren nach einem der vorhergehenden Ansprüche,
**dadurch gekennzeichnet,**
**daß** das Punktierungsmuster einen ersten Musterabschnitt für den Anfangsbereich des Datenblocks, einen zweiten Musterabschnitt für den mittleren Bereich des Datenblocks und einen dritten Musterabschnitt für den Endbereich des Datenblocks aufweist, und
**daß** das Punktierungsmuster derart ausgestaltet ist, daß die Punktierung des ersten Musterabschnitts spiegelsymmetrisch zu der Punktierung des dritten Musterabschnitts ist.

5. Verfahren nach einem der vorhergehenden Ansprüche,
**dadurch gekennzeichnet,**
**daß** mehrere aufeinanderfolgende Datenblöcke des Datenstroms mit demselben Punktierungsmuster punktiert werden.

6. Verfahren nach einem der Ansprüche 1-4,
**dadurch gekennzeichnet,**
**daß** das Punktierungsmuster in Abhängigkeit von der Länge des jeweils zu punktierenden Datenblocks entsprechend angepaßt wird.

7. Verfahren nach Anspruch 6,
**dadurch gekennzeichnet,**
**daß** das Punktierungsmuster für einen Datenblock, dessen Länge kleiner als ein vorgegebener Grenzwert ist, verkürzt wird.

8. Verfahren nach einem der vorhergehenden Ansprüche,
**dadurch gekennzeichnet,**
**daß** das Punktierungsmuster derart ausgestaltet ist, daß durch die Punktierung, von dem entsprechenden Ende des zu punktierenden Datenblocks her betrachtet, die Bits Nr. 2, Nr. 4, Nr. 7, Nr. 10, Nr. 14, Nr. 18, Nr. 22 und Nr. 26 des Datenblocks entfernt werden.

9. Verfahren nach einem der Ansprüche 1-7,
**dadurch gekennzeichnet,**
**daß** das Punktierungsmuster derart ausgestaltet ist, daß durch die Punktierung, von dem entsprechenden Ende des zu punktierenden Datenblocks her betrachtet, die Bits Nr. 1, Nr. 3, Nr. 6, Nr. 9, Nr. 13, Nr. 17, Nr. 21 und Nr. 25 des Datenblocks entfernt werden.

10. Verfahren nach einem der Ansprüche 1-7,
**dadurch gekennzeichnet,**
**daß** das Punktierungsmuster derart ausgestaltet ist, daß durch die Punktierung, von dem entsprechenden Ende des zu punktierenden Datenblocks her betrachtet, die Bits Nr. 1, Nr. 2, Nr. 4, Nr. 6, Nr. 8, Nr. 11, Nr. 14 und Nr. 17 des Datenblocks entfernt werden.

11. Verfahren nach einem der vorhergehenden Ansprüche,
**dadurch gekennzeichnet,**
**daß** der zu punktierende Datenblock mit einem Faltungscode codierte Daten umfaßt, wobei der Faltungscode eine Coderate 1/n und eine Constraint Length K aufweist, und
**daß** das Punktierungsmuster derart ausgestaltet ist, daß durch die Punktierung aus einem Anfangs- und/oder Endbereich des Datenblocks, in dem bei der Codierung mit dem Faltungscode Tailbits eingefügt werden, insgesamt weniger als n*(K-1) Bits entfernt werden.

12. Verfahren nach Anspruch 4 und Anspruch 11,
**dadurch gekennzeichnet,**
**daß** das Punktierungsmuster derart ausgestaltet ist, daß durch die Punktierung aus dem Anfangsbereich und dem Endbereich des Datenblocks jeweils weniger als n*(K-1)/2 Bits entfernt werden

13. Verfahren nach einem der vorhergehenden Ansprüche,
**dadurch gekennzeichnet,**
**daß** nach der Punktierung des Datenblocks ein weiterer Punktierungsvorgang, durch den aus dem bereits punktierten Datenblock nochmals Bits gemäß einem weiteren Punktierungsmuster entfernt werden, oder ein Repetierungsvorgang, durch den in dem bereits punktierten Datenblock Bits gemäß einem bestimmten Repetierungsmuster verdoppelt werden, durchgeführt wird.

14. Verfahren nach Anspruch 13,
**dadurch gekennzeichnet,**
**daß** das weitere Punktierungsmuster des weiteren Punktierungsvorgangs bzw. das Repetierungsmuster des Repetierungsvorgangs einer annähernd regelmäßigen Punktierung bzw. Repetierung des bereits punktierten Datenblocks entspricht.

15. Verfahren nach einem der vorhergehenden Ansprüche,
**dadurch gekennzeichnet,**
**daß** die Bits des Datenblocks vor der Punktierung zunächst vervielfacht werden, wobei bestimmte Bits des Datenblocks, welche gemäß dem Punktierungsmuster ausgewählt werden, gegenüber den übrigen Bits des Datenblocks mit einer geringeren Rate vervielfacht werden, und
**daß** der aus dieser Vervielfachung resultierende Bitstrom des Datenblocks anschließend mit einer derartigen Punktierungsrate punktiert wird, daß sich eine gewünschte Repetierungsrate ergibt.

16. Kommunikationsvorrichtung,
mit einer Punktierungseinrichtung (6) zur Punktierung eines Datenblocks eines der Punktierungseinrichtung (6) zugeführten Datenstroms gemäß einem bestimmten Punktierungsmuster, um die Datenrate des Datenstroms anzupassen, wobei die Punktierungseinrichtung (1) durch die Punktierung dem Punktierungsmuster entsprechende Bits aus dem Datenblock entfernt,
**dadurch gekennzeichnet,**
**daß** die Punktierungseinrichtung (6) derart ausgestaltet ist, daß sie die Punktierung mit einem Punktierungsmuster durchgeführt, welches von einem mittleren Bereich des Datenblocks zu mindestens einem Ende des Datenblocks hin eine stetig zunehmende Punktierungsrate aufweist.

17. Kommunikationsvorrichtung nach Anspruch 16,
**dadurch gekennzeichnet,**
**daß** die Kommunikationsvorrichtung (1) eine Mobilfunksende- oder Mobilfunkempfangsvorrichtung, insbesondere eine UMTS-Mobilfunksende- oder UMTS-Mobilfunkempfangsvorrichtung, ist.

## Claims

1. Method for adapting the data rate in a communication device,
comprising pointing of a data block of a data stream according to a specific pointing model, in order thus to adapt the data rate, with bits corresponding to the pointing model being removed from the data block by pointing,
**characterised in that**
pointing is carried out using a pointing model, which has a pointing rate that increases constantly from a centre region of the data block towards at least one end of the data block.

2. Method according to claim 1,
**characterised in that**
the pointing rate of the pointing model is essentially 0% in the centre region of the data block.

3. Method according to claim 1 or 2,
**characterised in that**
pointing is carried out using a pointing model, which has a pointing rate that increases constantly from the centre region of the data block towards both ends of the data block.

4. Method according to one of the preceding claims,
**characterised in that**
the pointing model has a first model segment for the start region of the data block, a second model segment for the centre region of the data block and a third model segment for the end region of the data block and
the pointing model is configured in such a manner that the pointing of the first model segment has mirror symmetry to the pointing of the third model segment.

5. Method according to one of the preceding claims,
**characterised in that**
a number of successive data blocks of the data stream are pointed using the same pointing model.

6. Method according to one of claims 1-4,
**characterised in that**
the pointing model is adapted correspondingly as a function of the length of the data block to be pointed in each instance.

7. Method according to claim 6,
**characterised in that**
the pointing model is shortened for a data block, the length of which is shorter than a predetermined limit value.

8. Method according to one of the preceding claims,
**characterised in that**
the pointing model is configured in such a manner that the bits no. 2, no. 4, no. 7, no. 10, no. 14, no. 18, no. 22 and no. 26 of the data block are removed by pointing - when viewed from the corresponding end of the data block to be pointed.

9. Method according to one of claims 1-7,
**characterised in that**
the pointing model is configured in such a manner that the bits no. 1, no. 3, no. 6, no. 9, no. 13, no. 17, no. 21 and no. 25 of the data block are removed by pointing - when viewed from the corresponding end of the data block to be pointed.

10. Method according to one of claims 1-7,
**characterised in that**
the pointing model is configured in such a manner that the bits no. 1, no. 2, no. 4, no. 6, no. 8, no. 11, no. 14 and no. 17 of the data block are removed by pointing - when viewed from the corresponding end of the data block to be pointed.

11. Method according to one of the preceding claims,
**characterised in that**
the data block to be pointed comprises data coded with a convolutional code, with the convolutional code having a code rate 1/n and a constraint length K, and the pointing model is configured in such a manner that in total fewer than n*(K-1) bits are removed by pointing from a start and/or end region of the data block, in which tailbits are inserted during coding with the convolutional code.

12. Method according to claim 4 and claim 11,
**characterised in that**
the pointing model is configured in such a manner that fewer than n*(K-1)/2 bits are removed by pointing from the start region and end region of the data block respectively.

13. Method according to one of the preceding claims,
**characterised in that**
after the data block has been pointed, a further pointing process is carried out, by means of which further bits are removed from the already pointed data block according to a further pointing model, or a repeating process is carried out, by means of which bits are duplicated in the already pointed data block according to a specific repeating model.

14. Method according to claim 13,
**characterised in that**
the further pointing model of the further pointing process or the repeating model of the repeating process corresponds to an approximately regular pointing or repeating of the already pointed data block.

15. Method according to one of the preceding claims,
**characterised in that**
the bits of the data block are first multiplied before pointing, with specific bits of the data block, selected according to the pointing model, being multiplied by a lower rate than the other bits of the data block and the bit stream of the data block resulting from this multiplication then being pointed with such a pointing rate that a required repeating rate results.

16. Communication device,
with a pointing facility (6) for pointing a data block of a data stream supplied to the pointing facility (6) according to a specific pointing model, in order to adapt the data rate of the data stream, with the pointing facility (1) removing bits corresponding to the pointing model from the data block by pointing,
**characterised in that**
the pointing facility (6) is configured in such a manner that it carries out pointing using a pointing model, which has a pointing rate that increases constantly from a centre region of the data block towards at least one end of the data block.

17. Communication device according to claim 16,
**characterised in that**
the communication device (1) is a mobile radio transmit or mobile radio receive device, in particular a UMTS mobile radio transmit or UMTS mobile radio receive device.

## Revendications

1. Procédé d'adaptation du débit de données dans un dispositif de communication,
comprenant un poinçonnage d'un bloc de données d'un flux de données selon un modèle de poinçonnage déterminé de manière à adapter ainsi le débit de données, le poinçonnage supprimant du bloc de données des bits conformes au modèle de poinçonnage,
**caractérisé en ce que**
l'on réalise le poinçonnage avec un modèle de poinçonnage lequel présente depuis une zone médiane du bloc de données vers au moins une extrémité du bloc de données un taux de poinçonnage croissant en continu.

2. Procédé selon la revendication 1,
**caractérisé en ce que**
le taux de poinçonnage du modèle de poinçonnage est essentiellement de 0 % dans la zone médiane.

3. Procédé selon la revendication 1 ou 2,
**caractérisé en ce que**
l'on réalise le poinçonnage avec un modèle de poinçonnage lequel présente depuis la zone médiane du bloc de données vers les deux extrémités du bloc de données un taux de poinçonnage croissant en continu.

4. Procédé selon l'une des revendications précédentes,
**caractérisé en ce que**
le modèle de poinçonnage comporte un premier segment de modèle pour la zone de début du bloc de données, un deuxième segment de modèle pour la zone médiane du bloc de données et un troisième segment de modèle pour la zone de fin du bloc de données, et
**en ce que** le modèle de poinçonnage est configuré de telle manière que le poinçonnage du premier segment de modèle soit symétrique au poinçonnage du troisième segment de modèle.

5. Procédé selon l'une des revendications précédentes,
**caractérisé en ce que**
l'on poinçonne plusieurs blocs de données successifs du flux de données avec le même modèle de poinçonnage.

6. Procédé selon l'une des revendications 1 à 4,
**caractérisé en ce que**
l'on adapte le modèle de poinçonnage en fonction de la longueur de chaque bloc de données à poinçonner.

7. Procédé selon la revendication 6,
**caractérisé en ce que**
l'on raccourcit le modèle de poinçonnage pour un bloc de données dont la longueur est inférieure à une valeur seuil prédéfinie.

8. Procédé selon l'une des revendications précédentes,
**caractérisé en ce que**
le modèle de poinçonnage est configuré de telle manière que le poinçonnage, vu depuis l'extrémité correspondante du bloc de données à poinçonner, supprime les bits n° 2, n° 4, n° 7, n° 10, n° 14, n° 18, n° 22 et n° 26 du bloc de données.

9. Procédé selon l'une des revendications 1 à 7,
**caractérisé en ce que**
le modèle de poinçonnage est configuré de telle manière que le poinçonnage, vu depuis l'extrémité correspondante du bloc de données à poinçonner, supprime les bits n° 1, n° 3, n° 6, n° 9, n° 13, n° 17, n° 21 et n° 25 du bloc de données.

10. Procédé selon l'une des revendications 1 à 7,
**caractérisé en ce que**
le modèle de poinçonnage est configuré de telle manière que le poinçonnage, vu depuis l'extrémité correspondante du bloc de données à poinçonner, supprime les bits n° 1, n° 2, n° 4, n° 6, n° 8, n° 11, n° 14 et n° 17 du bloc de données.

11. Procédé selon l'une des revendications précédentes,
**caractérisé en ce que**
le bloc de données à poinçonner comporte des données codées à l'aide d'un code de convolution, le code de convolution comprenant un taux de code 1/n et une Constraint Length K, et **en ce que** le modèle de poinçonnage est configuré de telle manière que le poinçonnage supprime dans une zone de début et/ou de fin du bloc de données où durant le codage des bits de queue sont insérés à l'aide du code de convolution, au total moins de n*(K-1) bits.

12. Procédé selon la revendication 4 et la revendication 11,
**caractérisé en ce que**
le modèle de poinçonnage est configuré de telle manière que le poinçonnage supprime dans la zone de début et la zone de fin du bloc de données à chaque fois moins de n*(K-1)/2 bits.

13. Procédé selon l'une des revendications précédentes,
**caractérisé en ce que**
l'on effectue, après le poinçonnage du bloc de données, un autre processus de poinçonnage qui supprime encore des bits dans le bloc de données déjà poinçonné selon un autre modèle de poinçonnage, ou un processus de répétition qui double des bits dans le bloc de données déjà poinçonné selon un modèle de répétition déterminé.

14. Procédé selon la revendication 13,
**caractérisé en ce que**
l'autre modèle de poinçonnage de l'autre processus de poinçonnage, respectivement le modèle de répétition du processus de répétition correspond à un poinçonnage, respectivement une répétition approximativement réguliers du bloc de données déjà poinçonné.

15. Procédé selon l'une des revendications précédentes,
**caractérisé en ce que**
l'on multiplie d'abord les bits du bloc de données avant le poinçonnage, certains bits du bloc de données sélectionnés selon le modèle de poinçonnage étant multipliés avec un taux inférieur par rapport aux autres bits du bloc de données, et **en ce que** l'on poinçonne ensuite le flux binaire du bloc de données résultant de cette multiplication avec un tel taux de poinçonnage que l'on obtient un taux de répétition voulu.

16. Dispositif de communication,
comprenant un dispositif de poinçonnage (6) pour poinçonner un bloc de données d'un flux de données amené audit dispositif de poinçonnage (6) selon un modèle de poinçonnage déterminé de manière à adapter le débit de données du flux de données, le dispositif de poinçonnage (1) supprimant par le poinçonnage dans le bloc de données des bits conformes au modèle de poinçonnage,
**caractérisé en ce que**
le dispositif de poinçonnage (6) est configuré de telle manière qu'il effectue le poinçonnage avec un modèle de poinçonnage lequel présente depuis une zone médiane du bloc de données vers au moins une extrémité du bloc de données un taux de poinçonnage croissant en continu.

17. Dispositif de communication selon la revendication 16,
**caractérisé en ce que**
le dispositif de communication (1) est un dispositif récepteur radio mobile ou émetteur radio mobile, en particulier un dispositif récepteur radio mobile UMTS ou émetteur radio mobile UMTS.
